# EUROPEAN PATENT APPLICATION

(11) **EP 1 858 019 A2**
(43) Date of publication of application: **21.11.2007**
(21) Application number: 07009957.7
(22) Date of filing: 18.05.2007
(51) Int. Cl.: G11B 27/10, G11B 27/34

(54) **Optical disc reproducing apparatus**

(30) Priority: 18.05.2006 JP 2006138526
(71) Applicant: Funai Electric Co., Ltd., Daito-shi Osaka 574-0013 (JP)
(72) Inventor: Takahashi, Hironobu, Osaka 574-0013 (JP)
(74) Representative: Beetz & Partner

(57) **Abstract**

An optical disc reproducing apparatus, which reproduces a moving picture with subtitles based on a subtitle file and an image file when the subtitle file whose main body part of file name is same as that of a name of image file is searched for and found out, is provided with a search unit 2 that searches a file whose extension part of file name means a subtitle file, in at least one of the optical disc and at least one external memory unit when the subtitle file is not found out from a same directory in the optical disc as the image file; and a reproducing unit 3 that reproduces moving pictures with subtitles based on the file that the search unit found and on the image file.

## Description

### BACKGROUND OF THE INVENTION

### Field of the Invention

The present invention relates to an optical disc reproducing apparatus.

### Description of the Prior Art

Heretofore, DVD (Digital Versatile Disc) players have been developed which can reproduce moving pictures with subtitles from DVD's in which image files and subtitle files are recorded. (Technologies for reproducing subtitles are described, for example, in the Patent Application Laid Open as 2003-18491 and the Patent Application Laid Open as 2005-217816.) In recent years, by downloading from the Internet, users can obtain subtitle files that respond to a wide variety of languages including such languages as are not main languages in the world. By recording the downloaded subtitle file in a DVD, together with an image file, the users can appreciate moving pictures with subtitles in optional languages by playing the DVD player.

However, in order to reproduce the moving pictures with subtitles from a DVD by playing the above mentioned conventional DVD player, it has been necessary that a subtitle file, having the same file name whose main body part is the same as the main body part of the file name of an image file ("having the same main body part of the file name" hereinafter), should be recorded in the directory on the DVD in which the image file is stored ("the same directory as the image file" hereinafter). A file name consists of a main body part, a period and an extension part. For example, in a case where the file name of an image file is "Movie_32.avi" (The portion indicated as "movie_32" thereof is the main body part, and the portion indicated as "avi" thereof is the extension part.), it was necessary that a subtitle file having the file name saying "Movie_32.srt" (The portion indicated as "srt" is one of the extension parts for the subtitle file.) should be recorded in the "same directory as the image file."

Therefore, when the users accidentally record a subtitle file, which has the file name whose main body part is different from that of the file name of an image file, in the same directory as the image file, or when the users record a subtitle file in a directory which is different from that of an image file by mistake, it has been impossible to reproduce the moving pictures with subtitles with a DVD player. In addition, in a case where the users record a moving file in a DVD and store the moving file separately in a USB memory and the like, it has been impossible to reproduce the moving pictures with subtitles with a DVD player.

For the above mentioned reasons, in order to make it possible to reproduce the moving pictures with subtitles with a DVD player, such extra efforts have been taken as to re-create a new DVD satisfying the above mentioned requirements or as to add a subtitle file, which has a file name satisfying the above mentioned requirements, to the same directory as that of the image file, which has caused the convenience of functions of the subtitle files to be little.

### SUMMARY OF THE INVENTION

In view of the above described, it is an object of the present invention to provide an optical disc reproducing apparatus that improves the convenience of the functions of the subtitle files.

To attain the above described object, an optical disc reproducing apparatus in accordance with a first aspect of the present invention, which reproduces a moving picture with subtitles based on a subtitle file and an image file when the subtitle file whose main body part of file name is same as that of a name of image file is searched for and found out, is provided with: a search unit that searches a file whose extension part of file name means a subtitle file, in at least one of the optical disc and at least one external memory unit when the subtitle file is not found out from a same directory in the optical disc as the image file; and/or a reproducing unit that reproduces moving pictures with subtitles based on the file that the search unit found and on the image file.

In accordance with such configuration as described above, even in such a case as the users accidentally create an optical disc in which such an image file and a subtitle file as do not satisfy the aforementioned conventional requirements are recorded, the users still can appreciate the moving pictures with subtitles. In addition, in a case where the users record an image file in an optical disc and separately store a subtitle file in an external storage unit such as a USB memory and the like, the users still can appreciate the moving pictures with subtitles. Therefore, it is not necessary to re-create a new optical disc or add a subtitle file to the optical disc as in the conventional manner, thereby improving the convenience of the functions of the subtitle files.

The optical disc reproducing apparatus in accordance with a second aspect of the present invention further includes a setting unit which memorizes setting information that specifies a subtitle file search function to be either valid or invalid, and the optical disc reproducing apparatus is characterized by a structure in that the search unit stops searching when at least one file is found out during the search.

The optical disc reproducing apparatus in accordance with a third aspect of the present invention further includes a signal producing unit that produces signals for displaying names of all subtitle files that the search units found out on a display unit, and the optical disc reproducing apparatus is characterized by a structure in that, the reproducing unit reproduces moving pictures with subtitles based on the image file and on the file that is selected from the file names displayed on the display unit.

According to the optical disc reproducing apparatuses in accordance with the present invention, the convenience of the functions of the subtitle files is improved.

Additional objects and advantages of the present invention will be set forth in the description which follows, and in part will be obvious from the description, or may be learned by practice of the invention.

### BRIEF DESCRIPTION OF THE DRAWINGS

FIG. 1 is a block diagram to show a DVD player in accordance with an embodiment of the present invention;
FIG. 2A and FIG. 2B are diagrams to show a display screen in setting the subtitle file search function.
FIG. 3 is a flow chart to show an example of operating procedure for reproducing an image file with a DVD player in accordance with the present invention.
FIG. 4A and FIG. 4B are diagrams to show the display screen when reproducing an image file.
FIG. 5 is a flow chart to show another example of operating procedure for reproducing an image file with the DVD player in accordance with the present invention.

### DETAILED DESCRIPTION OF PREFERRED EMBODIMENTS

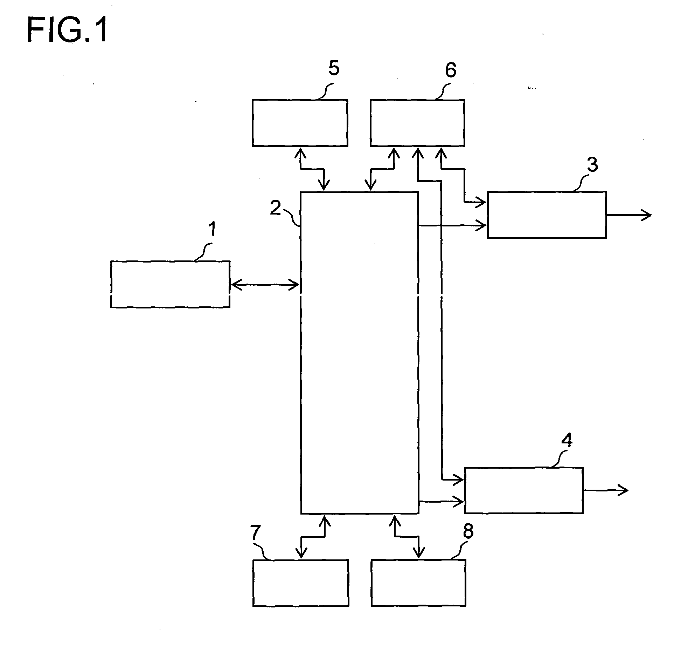

Referring now to the accompanying drawings, an optical disc reproducing apparatus according to an embodiment of the present invention will be explained hereinafter. FIG. 1 is a block diagram to show a DVD player in accordance with an embodiment of the present invention.

A disc read portion 1 includes an optical pickup, a spindle motor, a sled motor, a head amplifier and various drivers; reads information from a DVD by the control of a control portion 2; and feeds the information to the control portion 2. The control portion 2 demodulates the information that is supplied from the disc read portion 1 and corrects errors thereof so as to create reproduction information. The control portion 2 feeds compressed graphic information in the reproduction information to an video processing portion 3, and feeds compressed audio information in the reproduction information to a audio processing portion 4.

The video processing portion 3 generates graphic information by extending the compressed graphic information that is supplied from the control portion 2. In addition, by instructions supplied from the control portion 2, the video processing portion (a signal generating unit and a reproducing unit) 3 generates a graphic information and a character information; combines them with the graphic information so as to generate video signals; and then feeds the video signals to a display apparatus (a display unit, not shown), such as television and the like, that is connected to a DVD player. Additionally, the video processing portion 3 also generates the video signals only from the graphic information and the character information, and feeds them to the display apparatus. The audio processing portion 4 extends the compressed audio information that is supplied from the control portion 2, so as to convert them into analog audio signals and feeds them to the display apparatus that is not illustrated herein.

A flash memory 5 is a nonvolatile memory in which control programs and various configuration information for the control portion 2 are memorized. DRAM 6 is a working memory for the control portion 2. USB interface (I/F) 7 is an interface to which a USB memory (an external storage unit, not shown) is connected. A remote control receiving portion 8 receives infrared signals from a remote controller (not shown) and feeds code signals to the control portion 2.

The characteristic operation of a DVD player in accordance with an embodiment of the present invention, having the configuration as described above, will be described hereinafter.

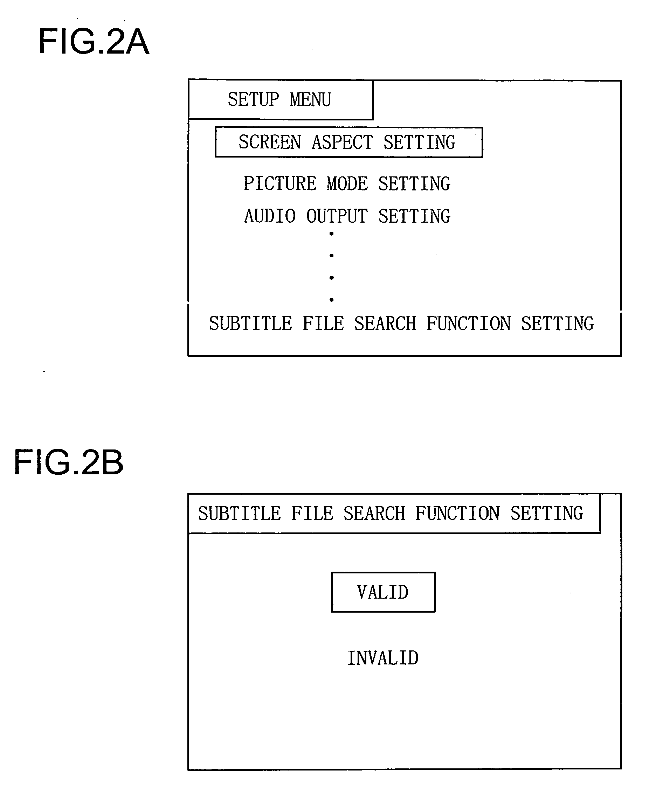

First, when Setup Menu Display key of a remote controller (not shown) is pressed, the control portion 2 instructs the video processing portion 3 to generate a graphic information and a character information. And by the video signals that are output from the video processing portion 3, a setup menu screen as shown in FIG. 2A is displayed on a display apparatus (not shown). At this point, various setting items are displayed in a list, and a selection flame is moved to "Subtitle File Search Function Setting" among them by operating the arrow keys of the remote controller. When Enter key of the remote controller is pressed, the control portion 2 instructs the video processing portion 3 to generate the graphic information and the character information, and by the video signals output from the video processing portion 3, such a screen as shown in FIG. 2B is displayed on the display apparatus.

At this point, are displayed the items to determine whether to make the subtitle file search function valid or invalid. By operating the arrow keys of the remote controller, the selection flame is moved to either of the above mentioned two items. Then, when Enter key of the remote controller is pressed, the control portion 2 makes the flash memory 5 (a setting unit) memorize the setting information that indicates whether the subtitle file search function is valid or invalid, and instructs the video processing portion 3 to generate the graphic information and the character information. And then, by the video signals output from the video processing portion 3, such a setup menu screen as shown in FIG. 2A is displayed again on the display apparatus. At this point, the setting information which is stored in the flash memory 5 is reflected to the operation during reproduction of an image file that will be described hereinafter.

Next, the operation during the reproduction of an image file will be described hereinafter.

First, when Main Menu Display key of the remote controller is pressed, the control portion 2 instructs the video processing portion 3 to generate the graphic information and the character information. Then, by the video signals output from the video processing portion 3, the main menu screen is displayed on the display apparatus. When the item of "image file Reproduction" is selected from the main menu screen that is displayed, the control portion (a search unit) 2, by means of the disc read portion 1, searches for the image files that are recorded in a DVD, and instructs the video processing portion 3 to display on the display apparatus the names of the moving files that are found out. The video processing portion 3 generates the graphic information and the character information by the instructions from the control portion 2, and feeds the video signals thereof to the display apparatus. Then, on the display apparatus are displayed in a list the names of the image files that are found out.

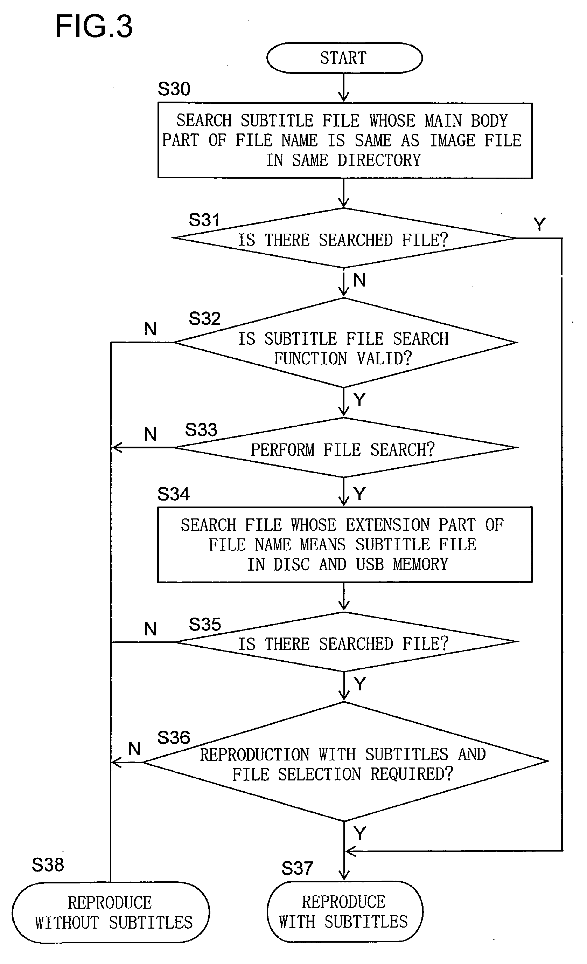

At this point, when the name of any of the image files is selected by operating the remote controller, the process begins the operation of the flow chart shown in FIG. 3. The operation will be described in accordance with the above mentioned flow chart hereinafter.

First, in Step S30, by means of the disc read portion 1, the control portion 2 searches for the subtitle file whose main body part of file name is same as that of a name of the image file in the same directory on the DVD in which the selected image file is stored.

Then, when there exists the subtitle file that is found out in the above mentioned Step S30 ("Y" in Step S31), the control portion 2 makes DRAM 6 memorize the subtitle file. The disc read portion 1 feeds compressed graphic information, based on the moving file having the selected file name, to the video processing portion 3. Then, the video processing portion 3 generates the graphic information by extending the compressed graphic information; reads out the subtitle file stored in DRAM 6 so as to generate the character information; and generates the video signals by combining the graphic information and the character information so as to feed them to the display apparatus. Subsequently, on the display apparatus are displayed the subtitles, being overlapped over the moving pictures. (Step S37)

At this point, when there are no files found out in the above mentioned Step S31 ("N" in Step 31), the process moves to Step32. Then, the control portion 2, by referring to the setting information that is stored in the aforementioned flash memory 5, judges whether the subtitle file search function is valid or invalid. If the subtitle file search function is invalid ("N" in Step S32), the disc read portion 1 feeds to the video processing portion 3 the compressed graphic information which is based on the image file having the selected file name; and the video processing portion 3 generates the graphic information by extending the compressed graphic information, and feeds the video signals to the display apparatus. Then, on the display apparatus are displayed the moving pictures without the subtitles. (Step 38)

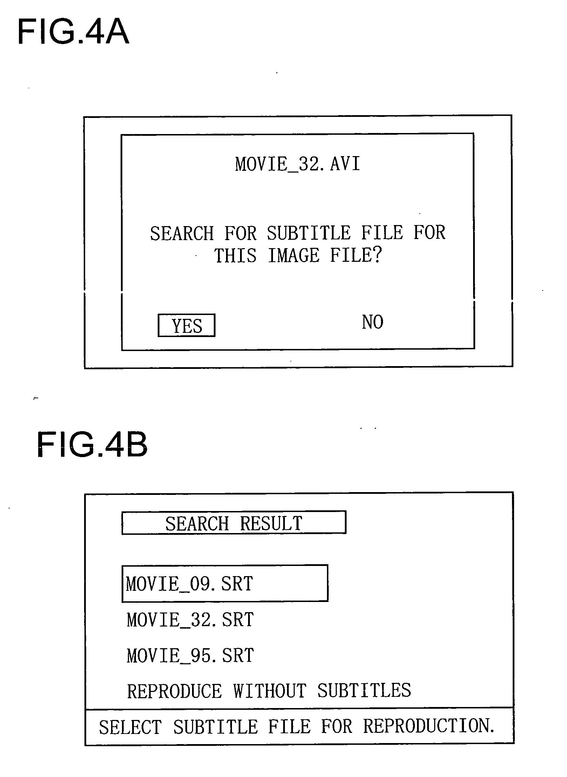

If the subtitle file search function is valid ("Y" in Step S32), the process moves to Step S33, in which the control portion 2 instructs the video processing portion 3 to generate the graphic information and the character information. Then, on the display apparatus is displayed such a dialog as shown in FIG. 4A, which makes the user select to determine whether to search for the subtitle file or not.

At this point, when "YES" is selected, the process moves to Step S34 that will be described hereinafter. When "NO" is selected, the process moves to Step S38, and then, the moving pictures will be displayed without the subtitles.

In Step S34, by means of the disc read portion 1, the control portion 2 searches for the subtitle file that is recorded in the DVD. If the searched file is the subtitle file or not is judged by whether the extension part of the file name is the extension part for the subtitle file or not. In addition, the control portion 2 also makes a search to determine whether exists or not the subtitle file that is stored in the USB memory (not shown) connected to the USB interface 7.

Then, when there exists the file that has been found out in the above mentioned Step S34 ("Y" in Step 35), the process moves to Step 36 that will be described later. When there exist no files ("N" in Step S35), the process moves to Step S38, and then, the moving pictures will be displayed without the subtitles.

In Step S36, the control portion 2 makes the display apparatus display whether reproduction with the subtitles is necessary or not and display to select the file name from the files that are found out. The video processing portion 3 generates the graphic information and the character information by the instructions from the control portion 2 and feeds the video signals to the display apparatus. Then, on the display apparatus is displayed a search result screen as shown in FIG. 4B. At this point, the names of the files that are found out and the items indicating the selection of the reproduction without the subtitles are displayed in a list.

At this point, by the operation of the arrow keys of the remote controller, the selection flame is moved to any one of the file name; and when Enter key of the remote controller is pressed, the control portion 2 makes DRAM 6 memorize the file having the file name that is selected from the DVD or the USB memory. Then, the control portion 2 feeds to the video processing portion 3 the compressed graphic information based on the selected image file that the disc read portion 1 reads out from the DVD; and then, the video processing portion 3 generates the graphic information by extending the compressed graphic information, generates the character information by reading out the file stored in the above mentioned DRAM 6, and generates the video signals by combining the graphic information and the character information, so as to feed the video signals to the display apparatus. Subsequently, on the display apparatus are displayed the subtitles, being overlapped on the moving pictures.

In the above mentioned Step S36, when the reproduction of the moving pictures without the subtitles is selected, the process moves to the step S38, and then, on the display apparatus are displayed the moving pictures without the subtitles.

In consequence, even if the users make mistakes in the directory to store the subtitle file and in the file name thereof, the subtitle file can be found out and the file name thereof can be displayed, so that when the users select the file name, the moving pictures with the subtitles based on the selected subtitle file can be reproduced. Additionally, in a case where the users record only the image file in the DVD and store the subtitle file in the external memory such as the USB memory and the like, separately, the subtitle file can be found out and the file name thereof can be displayed, so that when the users select the file name, the moving pictures with the subtitles based on the selected subtitle file can be reproduced.

Therefore, as in conventional manner, such extra efforts will not be necessary as re-recording the image file and the subtitle file on a new DVD or adding the subtitle file to the same directory as the image file, whereby the convenience of the functions of the subtitle file is improved.

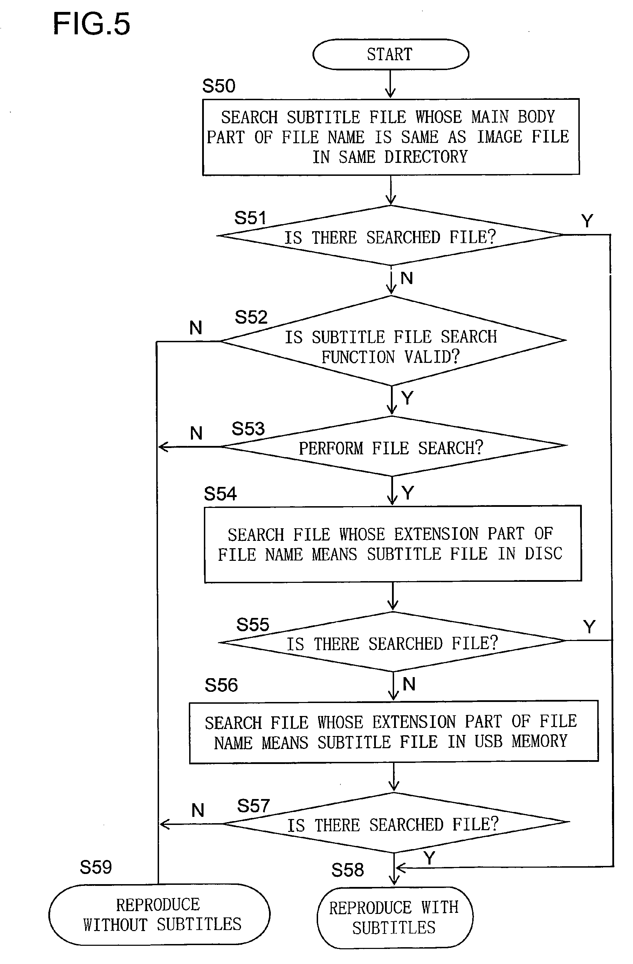

Moreover, as described above, in a state where the name of the image file is displayed in a list on the display apparatus, when the file name of any one of the image files is selected , it may be possible to the process begins the operation of the flow chart shown in FIG. 5. The operation will be described in accordance with the flow chart hereinafter.

In FIG. 5, the operation in Steps S50 through S53 are the same as those in Steps S30 through S33 in the aforementioned FIG. 3.

In Step S53, on the display apparatus is displayed such a dialog as shown in FIG. 4A, which makes the user select to determine whether to search for the subtitle file or not. At this point, when the selection flame is moved to "YES" by the operation of the arrow keys of the remote controller and ENTER key is pressed, the process moves to Step S54 that will be described hereafter. At this point, when "NO" is selected in the same manner, the process moves to Step S59, and the on the display apparatus can be displayed the moving pictures without the subtitles.

In Step S54, by means of the disc read portion 1, the control portion 2 starts searching for the file that is stored in the DVD that has the file name whose extension part means that the file is a subtitle file.

Then, when any file is found out ("Y" in Step S55), the control portion 2 stops searching, and makes DRAM 6 memorize the above mentioned searched-out file that is read out from the DVD. Subsequently, the control portion 2 feeds to the video processing portion 3 the compressed graphic information based on the image file having the selected file name that the disc read portion 1 reads out from the DVD. The video processing portion 3 generates the graphic information by extending the compressed graphic information, generates the character information by reading out the file that is stored in the above mentioned DRAM 6, and generates the video signals by combining the graphic information and the character information, so as to feed them to the display apparatus. Then, the subtitle is displayed on the display apparatus, being overlapped over the moving picture. (Step S58)

At this point, in the above mentioned Step S55, when the searched-out file is not in the DVD ("N" in the Step S55), the process moves to Step S56, and the control portion 2 searches for the file, which is stored in the USB memory, having the file name whose extension part means that the file is a subtitle file.

Then, when any file is found out ("Y" in the Step S57), the control portion 2 stops searching, and makes DRAM 6 memorize the file found out from the USB memory. Subsequently, the control portion 2 feeds to the video processing portion 3 the compressed graphic information based on the image file having the selected file name. Then, the video processing portion 3 generates the graphic information by extending the compressed graphic information, and generates the character information by reading out the file stored in the above mentioned DRAM 6, and generates the video signals by combining the graphic information and the character information, so as to feed them to the display apparatus. As a result, on the display apparatus are displayed the subtitles, being overlapped over the moving pictures. (Step S58)

Moreover, when the file that is searched in the above mentioned Step S57 is not stored in the USB memory ("N" in the Step S57), in Step S59, the moving pictures are displayed without the subtitles on the display apparatus.

In consequence, even if the users make mistakes in the directory to store the subtitle file and in the file name thereof, the subtitle file can be found out, and the moving pictures with the subtitles based on the subtitle file thereof can be reproduced. Additionally, in a case where the users record only the image file in the DVD and store the subtitle file in the USB memory separately, the subtitle file can be found out, and the moving pictures with the subtitles based on the subtitle file can be reproduced.

Therefore, in accordance with such configuration as described above, such extra efforts will not be necessary as re-recording the image file and the subtitle file on a new DVD or adding the subtitle file to the same directory as the image file, as in conventional manner, whereby the convenience of the functions of the subtitle file is improved.

At this point, in the above mentioned Step S34 (FIG. 3), Step S54 and Step S56 (FIG. 5), such file may be searched for which has the file name whose main body part is the same as the main body part of the file name of the image file and whose extension part means that the file is made as the subtitle file. In consequence, even if the users make mistakes in the directory to store the subtitle file and in the file name thereof, it is possible to reproduce the moving pictures with the subtitles based on the subtitle file.

Moreover, in the embodiment described above in accordance with the present invention, by providing the memory card interface instead of the USB interface, the file in the memory card that is connected to the memory card interface may be searched for, and by providing the memory card interface in addition to the USB interface, the files in the USB memory and the memory card may be searched for as the external memory.

## Claims

1. An optical disc reproducing apparatus, which reproduces a moving picture with subtitles based on a subtitle file and an image file when the subtitle file whose main body part of file name is same as that of a name of image file is searched for and found out, is provided with:
a search unit that searches a file whose extension part of file name means a subtitle file, in at least one of the optical disc and at least one external memory unit when
the subtitle file is not found out from a same directory in the optical disc as the image file; and
a reproducing unit that reproduces moving pictures with subtitles based on the file that the search unit found and on the image file.

2. The optical disc reproducing apparatus as described in Claim 1 further comprising a setting unit which memorizes setting information that specifies a subtitle file search function to be either valid or invalid the optical disc reproducing apparatus is **characterized by** a structure in that the search unit stops searching when at least one file is found out during the search.

3. The optical disc reproducing apparatus as described in Claim 1 or 2, further comprising a signal producing unit that produces signals for displaying names of all subtitle files that the search units found out on a display unit, the optical disc reproducing apparatus is **characterized by** a structure in that, the reproducing unit reproduces moving pictures with subtitles based on the image file and on the file that is selected from the file names displayed on the display unit.
